# FASCICULE DE BREVET EUROPEEN

(11) **EP 2 969 544 B1**
(45) Date de publication et mention de la délivrance du brevet: **03.05.2017**
(21) Numéro de dépôt: 14713529.7
(22) Date de dépôt: 05.03.2014
(51) Int. Cl.: B32B 15/00, B32B 3/12

(54) **AME DE MATERIAU STRUCTURAL A BASE DE PROFILES, MATERIAU STRUCTURAL ET PROCEDE DE FABRICATION**
STRUKTURMATERIALKERN AUF DER BASIS VON PROFILELEMENTEN, STRUKTURMATERIAL UND HERSTELLUNGSVERFAHREN
STRUCTURAL MATERIAL CORE BASED ON PROFILED ELEMENTS, STRUCTURAL MATERIAL AND MANUFACTURING METHOD

(30) Priorité: 11.03.2013 FR 1352144
(43) Date de publication de la demande: 20.01.2016
(73) Titulaire: Brun, Frédéric, 14000 Caen (FR); Chermant, Alexis, 14640 Auberville (FR)
(72) Inventeur: BRUN, Frédéric, F-14000 Caen (FR)
(74) Mandataire: Cabinet Plasseraud
(86) Numéro de dépôt international: PCT/FR2014/050493
(87) Numéro de publication internationale: WO 2014/140453

(56) Documents cités:
- WO-A1-88/06970
- WO-A1-94/17993
- US-A- 3 872 564
- US-A- 3 991 245
- US-A- 4 063 742
- US-A- 5 310 586

## Description

La présente invention est relative aux âmes de matériaux structuraux, aux matériaux structuraux comportant une telle âme et aux procédés permettant de fabriquer une telle âme.

Les matériaux structuraux sandwich sont généralement composés de deux peaux externes solidarisées sur les faces opposées d'une âme. Ladite âme peut être réalisée dans une grande variété de matières constitutives et est faite de telle sorte qu'elle possède une forte résistance structurale à la compression et à la flexion tout en conservant un poids minimal. Ces matériaux structuraux possèdent de nombreuses applications par exemple dans le domaine de l'aéronautique ou de l'automobile.

Parmi ces matériaux, les plus connus sont ceux comportant une âme en nid d'abeille. Ces âmes sont constituées de feuilles mises en forme puis fixées ensemble à des points précis pour constituer un réseau d'alvéoles de profil hexagonal, parfois déformé, qui s'étendent perpendiculairement audites peaux externes. De nombreux matériaux peuvent être utilisés pour la réalisation de cette âme, par exemple du carton, de l'aluminium, du plastique, des matières composites ou des métaux.

L'avantage de tels matériaux est de disposer d'une structure à la fois résistante et légère.

Différents modèles géométriques ont été créés et les améliorations proposées portent principalement sur les caractéristiques suivante :
- la facilité de mise en forme (cintrage cylindrique ou sphérique),
- l'absorption d'énergie,
- l'augmentation des caractéristiques mécaniques générales,
- l'augmentation des caractéristiques mécaniques en cisaillement dans le sens W.

Toutefois, l'état de la technique permet de constater qu'aucun des modèles proposés ne satisfait à tous ces critères simultanément. En particulier, les caractéristiques mécaniques principales, à savoir la résistance en compression, la résistance en cisaillement dans le sens L et dans le sens W, jouent aux vases communiquant suivant la configuration géométrique cellulaire retenue : la hausse de l'une d'elle se traduit par la baisse de l'une ou des autres conjointement, si l'on raisonne à masse volumique constante.

L'invention a pour objectif de proposer une âme de matériau structural qui offre à la fois une facilité de mise en forme et des caractéristiques mécaniques au moins aussi bonnes que celles que l'on arrive à obtenir aujourd'hui avec des structures à cellules hexagonales du type nid d'abeille.

### ARRIERE PLAN TECHNOLOGIQUE

On connait du document US 5 431 980 des âmes de matériaux structuraux qui peuvent être utilisées pour créer des parois à la fois rigides, légères et courbes.

Pour ce faire, le document prévoit notamment une âme de matériau structural qui comporte des cellules en forme de nid d'abeille, lesquelles cellules présentent des côtés avec des formes particulières, du type avec des formes ondulées, des dessins en demi-cercle etc.

Les âmes sont réalisées à partir de bandes ondulées superposées les unes sur les autres, et reliées ponctuellement les unes aux autres par des zones de fixation. Les bandes ondulées présentant un motif répété sur toute leur longueur, et le motif comprend une zone plate en alternance avec une zone ondulée. Les zones plates de chaque bande ondulée sont fixées en alternance soit à une zone plate d'une bande ondulée supérieure soit à une zone plate d'une bande ondulée inférieure. Par ailleurs, l'âme de matériau est déployable entre un état compact et un état déployé par expansion des bandes ondulées superposées suivant une direction perpendiculaire à la direction desdites bandes ondulées superposées.

On connait également des documents WO 88/06970 ou WO 94/17993 des âmes de matériau structural sandwich, s'étendant sensiblement suivant des directions d'extension (X, Y) et étant destinée à être comprise entre une surface inférieure et une surface supérieure, opposées selon une direction d'épaisseur, ladite âme comportant une structure en nid d'abeille, à cellules sensiblement hexagonales régulières, les cellules comprenant :
- au moins deux côtés adjacents reliés par une arête, les deux côtés adjacents présentant une première longueur et comportant chacun une zone ondulée, et
- au moins deux côtés parallèles présentant une seconde longueur et étant sensiblement plats.

### OBJET DE L'INVENTION

L'invention a pour objet une âme de matériau structural du type de celle décrite dans le document US 5 431 980, qui présente de meilleurs caractéristiques mécaniques, et notamment une meilleure raideur.

Pour ce faire, l'invention concerne en premier lieu une âme de matériau structural sandwich, telle que définie ci avant au regard des document WO 88/06970 ou WO 94/17993, c'est-à-dire une âme qui s'étend sensiblement suivant des directions d'extension (X, Y) et qui est destinée à être comprise entre une surface inférieure et une surface supérieure, opposées selon une direction d'épaisseur, ladite âme comportant une structure en nid d'abeille, à cellules sensiblement hexagonales régulières, les cellules comprenant deux côtés adjacents, reliés par une arête, présentant une première longueur et comportant une zone ondulée, ainsi que deux côtés parallèles présentant une seconde longueur et étant sensiblement plats.

Suivant l'invention, l'âme est remarquable en ce que, concernant les deux côtés adjacents (présentant les zones ondulées), l'un est l'image de l'autre par rotation d'un certain angle autour de l'arête qui relie les deux côtés adjacents.

De plus, conformément à l'invention, ladite première longueur est comprise sensiblement entre 80 et 120 % de ladite seconde longueur.

On comprendra par « longueur » la distance la plus courte prise entre deux arêtes de la cellule hexagonale.

Le fait d'avoir des cellules dont les côtés ont des longueurs telles que définies ci-dessus permet une meilleure raideur tout en autorisant une adaptation de l'âme à des formes courbes ou sphériques.

Le fait d'avoir des côtés adjacents ondulés qui sont les images l'un de l'autre par rotation autour d'une arête qui les relie permet de superposer les deux côtés adjacents l'un sur l'autre dans une configuration compacte de l'âme. Ainsi, l'âme compactée obtenue est sensiblement plate, à tout le moins fine, et est donc peu encombrante.

L'âme de matériau structural conforme à l'invention peut toutefois être réalisée de différentes façons.

Elle peut être moulée, par exemple.

Elle peut également être réalisée sous la forme d'une structure feuilletée déployable, ce qui la rend ainsi facilement transportable car peu encombrante.

Pour ce faire, la structure en nid d'abeille de l'âme conforme à l'invention peut comprendre des bandes ondulées superposées les unes sur les autres, et reliées ponctuellement les unes aux autres par des zones de fixation, lesdites bandes ondulées présentant un motif répété sur toute leur longueur, ledit motif comprenant une zone plate en alternance avec une zone ondulée, lesdites zones plates de chaque bande ondulée étant fixées en alternance soit à une zone plate d'une bande ondulée supérieure soit à une zone plate d'une bande ondulée inférieure, ladite âme de matériau étant déployable entre un état compact et un état déployé par expansion des bandes ondulées superposées suivant une direction perpendiculaire à la direction desdites bandes ondulées superposées. Dans ce cas, en position déployée, (i) les bandes ondulées fixées les unes aux autres forment les deux dits côtés adjacents comportant les zones ondulées et (ii) les deux côtés parallèles sensiblement plats sont formés par deux zones plates de deux bandes ondulées superposées.

L'âme conforme à l'invention peut également comporter les caractéristiques suivantes, prises séparément ou en combinaison :
- ladite zone ondulée peut présenter un motif en zigzag comprenant au moins deux bosses ;
- lesdites au moins deux bosses du motif en zigzag peuvent présenter chacune un sommet en pointe. Une tel mode de réalisation, associé à la réalisation de l'âme sous la forme initiale d'une structure déployable, permet de réaliser une structure feuilletée déployable peu épaisse car les formes en zigzag avec des sommets en pointes permettent un meilleur emboitement des bandes ondulées les unes sur les autres (ceci comparé à l'emboitement des bandes ondulées dont les formes d'ondulation sont en demi-cercle, par exemple les formes décrites dans les exemples du document US 5 431 980) ;
- et ladite structure en nid d'abeille peut être réalisée en alliage d'aluminium.

L'invention vise, en second lieu, un matériau structural sandwich comprenant une âme telle que définie ci-dessus, ladite âme étant fixée à au moins une peau externe.

L'invention vise encore, en troisième lieu, un procédé de fabrication d'une âme de matériau structural sandwich telle que définie ci avant.

Le procédé comprend les étapes suivantes :
- une première étape de passage d'une bande de matériau déformable entre deux rouleaux,
- une seconde étape de poinçonnage de ladite bande pour réaliser une succession de zones ondulées et de zones plates équidistantes sur ladite bande, de façon à obtenir une bande ondulée,
- une troisième étape de solidarisation d'une première bande ondulée supérieure à une seconde bande ondulée inférieure par fixation d'une zone plate sur deux entre ladite bande ondulée supérieure et ladite bande ondulée inférieure,
- une quatrième étape de solidarisation d'une autre bande ondulée supplémentaire aux bandes ondulées déjà solidarisées par fixation des zones plates de la bande ondulée supplémentaire aux zones plates de la bande ondulée supérieure qui n'ont pas été fixées aux zones plates de la bande ondulée inférieure, et
- une répétition éventuelle de la quatrième étape plusieurs fois de façon à obtenir une structure feuilletée comportant un nombre prédéterminé de bandes ondulées solidarisées entre elles.

Le procédé conforme à l'invention peut également comporter les caractéristiques suivante :
- il peut comporter une étape supplémentaire suivant laquelle la structure est déployée en étendant les bandes ondulées superposées et solidarisées suivant une direction perpendiculaire à la direction des bandes ;
- il peut en outre comporter une étape supplémentaire de trempe de ladite structure déployée dans une résine,
- il peut enfin comporter une étape supplémentaire de cuisson de la structure déployée après l'étape de trempe, de façon à rigidifier la structure déployée.

### BREVE DESCRIPTION DES DESSINS

Pour pouvoir être exécutée, l'invention est exposée de façon suffisamment claire et complète dans la description suivante qui est, en plus, accompagnée de dessins dans lesquels :
- La figure 1 montre partiellement une âme de matériau structural en position compactée, vue en perspective et sensiblement de dessus,
- La figure 2 montre l'âme de matériau structural de la figure 1, en position compactée, montrée en entier et vue en perspective en position allongée,

- la figure 3 montre l'âme illustrée sur les figures 1 et 2, en position déployée, vue en perspective,
- et la figure 4 est une vue de dessus de l'âme déployée montrée en figure 3.

### DESCRIPTION DETAILLEE

Dans la description qui suit, les termes « inférieur », « supérieur », « haut », « bas » etc... sont utilisés en référence aux dessins pour une plus grande facilité de compréhension. Ils ne doivent pas être compris comme étant des limitations de la portée de l'invention.

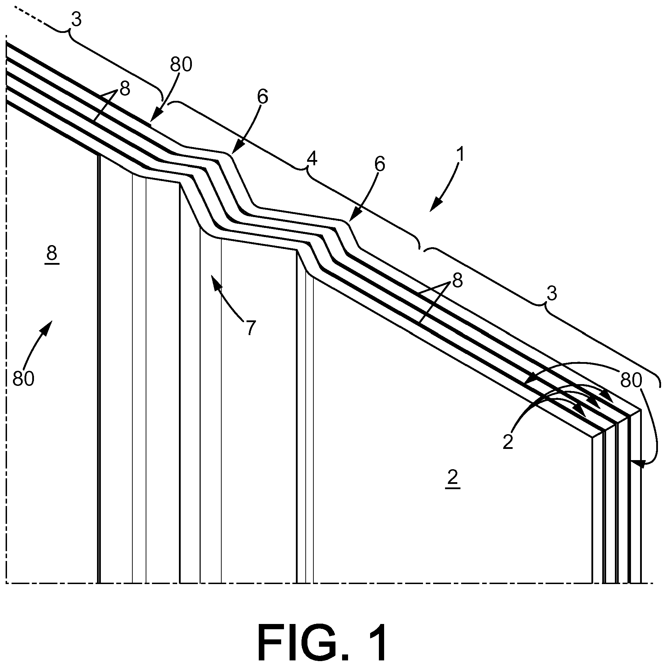

La figure 1 ne montre qu'une partie d'une âme 1 conforme à l'invention, de façon volontaire, de sorte à bien distinguer les divers éléments que l'âme 1 comporte.

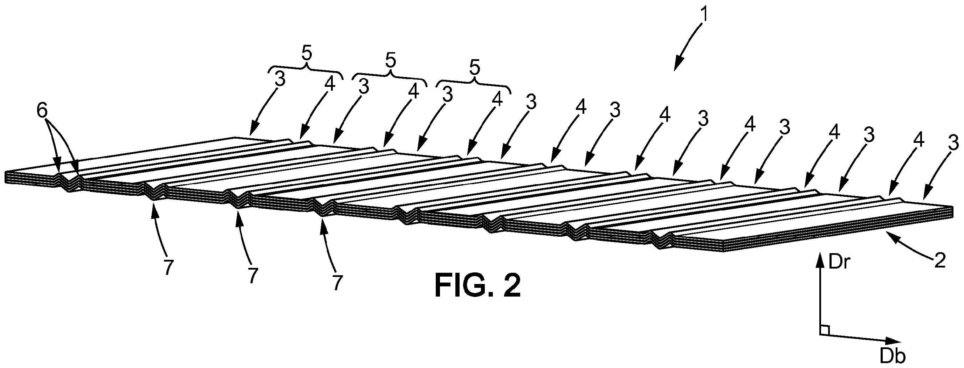

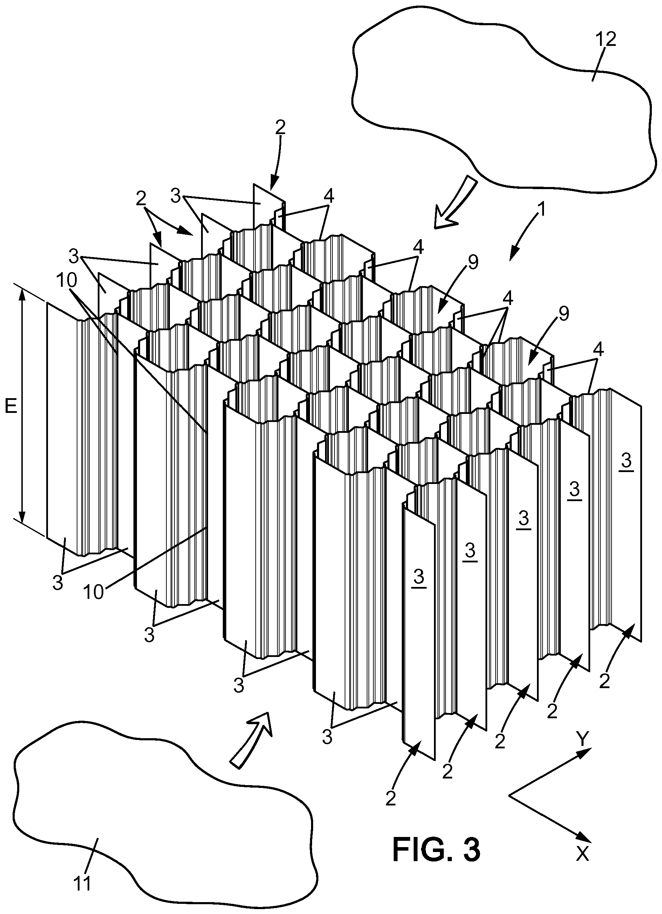

L'âme 1 est montrée dans son entier, en position compacte, en figure 2, et en position déployée en figure 3.

Dans l'exemple de réalisation illustré sur les figures 1 et 2, l'âme 1 comporte quatre bandes ondulées 2 . Dans l'exemple illustré sur la figure 3, l'âme 1 en comporte cinq.

Ainsi, une âme de matériau structural conforme à l'invention n'est pas limitée à la présence d'une quantité particulière de bandes ondulées 2 .

Il devra ainsi être compris que l'âme 1 pourrait comporter plus de cinq bandes ondulées 2 ou moins de quatre bandes ondulées 2 sans sortir du cadre de l'invention.

Les bandes ondulées 2 sont, dans le cadre de ce mode de réalisation, des bandes de matériau métallique en alliage d'aluminium.

Il devra également être compris que l'âme pourrait être réalisée dans un autre matériau, malléable ou non malléable, sans sortir du cadre de l'invention.

En effet, dans l'exemple représenté, l'âme est réalisée à partir de bandes qui sont initialement superposées et reliées entre elles, puis déployées par expansion de la structure.

Or, l'invention pourrait également s'appliquer à la réalisation d'une âme moulée, comprenant toutes les caractéristiques conformes à l'invention et telles que définies plus loin.

Comme le montrent les figures 1 et 2, les bandes ondulées 2 sont superposées les unes sur les autres.

Chacune des bandes ondulées 2 comporte, en alternance, une zone plate 3 et une zone ondulée 4. Une zone plate 3 suivie d'une zone ondulée 4 forme un motif 5 qui est ainsi répété sur toute la longueur de la bande ondulée 2 (voir figure 2).

Chaque zone ondulée 4 présente un motif en zigzag, présentant trois changements de direction. Autrement dit, chaque motif en zigzag présente deux bosses 6 orientées d'un côté de la bande 2, et une bosse 7 orientée de l'autre côté de la bande 2.

On remarque également que les bosses 6 et 7 présentent des sommets en pointe.

Cette configuration des zones en zigzag permet de superposer les bandes ondulées 2 de façon très proche les unes des autres.

Autrement dit, grâce à la forme particulière des zones ondulées, les bandes ondulées 2 superposées forment un ensemble multicouche très fin, de telle sorte qu'une fois les bandes ondulées 2 empilées, les zones ondulées 4 n'engendrent pas un espacement de deux bandes ondulées 2 superposées qui est supérieur à une épaisseur de colle 8 au niveau des zones plates 3. Cette épaisseur de colle est sensiblement de quelques microns.

Ainsi, pour former l'âme 1, les bandes ondulées 2 sont reliées par application d'une épaisseur de colle qui est réalisée sur les zones plates 4 de la façon suivante :
Comme on peut le voir sur la figure 1, la bande ondulée 2 présente une épaisseur de colle sur chacune de ses zones plates 3, mais une fois l'épaisseur de colle est déposée sur la zone plate 3, une fois elle est déposée sous la zone plate 3.

Autrement dit, les zones plates 3 des bandes ondulées 2 sont fixées en alternance soit à une zone plate 3 d'une bande ondulée 2 supérieure, soit à une zone plate 3 d'une bande ondulée 2 inférieure.

Les zones sur lesquelles est déposée une épaisseur de colle 8 sont appelées des zones de fixation 80.

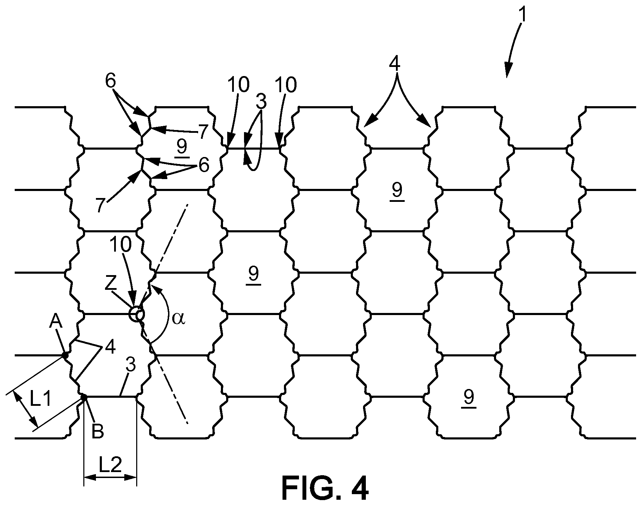

Pour passer de la position (ou de l'état) compacte montrée en figures 1 et 2 à la position (ou à l'état) déployée montrée en figures 3 et 4, on procède à une expansion des bandes ondulées. Cette expansion est réalisée en tirant sur les bandes ondulées suivant une direction Dr qui est perpendiculaire à la direction Db des bandes ondulées. Les directions Db et Dr sont visibles sur la figure 2. En réalisant cette opération, les zones ondulées 4 effectuent une rotation d'axe Z.

Ainsi, en position déployée montrée sur les figures 3 ou 4, les bandes ondulées 2 sont fixées les unes aux autres et elles forment un réseau de cellules 9 sensiblement hexagonales du type nid d'abeille. L'âme 1 de matériau s'étend alors sensiblement suivant deux directions X et Y montrées sur la figure 3.

Chaque cellule comporte ainsi six côtés, sensiblement parallèles deux à deux.

Parmi ces six côtés, au moins deux côtés sont formés par les zones ondulées 4 des bandes ondulées 2, et deux côtés sont plats et sont formés par les zones plates 3 des bandes ondulées 2.

Deux côtés adjacents 4, formés par deux zones ondulées de deux bandes ondulées superposées et reliées entre elles, comportent donc chacun une zone ondulée et présente une première longueur L1.

La longueur L1 est montrée en figure 4 et est la distance la plus courte prise entre les deux extrémités A et B d'un côté adjacent 4 présentant une zone ondulée.

On note par ailleurs, sur la figure 4, que les côtés ondulés adjacents formés par les zones ondulées 4 sont symétriques par révolution (ou rotation) d'un angle α autour de l'arête 10 (ou de l'axe Z suivant lequel s'étend l'arête 10), l'arête 10 reliant les deux côtés adjacents ondulés.

Cela signifie concrètement que pour deux côtés adjacents formés par les zones ondulées 4, l'un des côtés présente les deux bosses 6 vers l'extérieur de la cellule 9 et que l'autre côté adjacent présentent les deux bosses 6 vers l'intérieur de la cellule.

Les deux côtés de la cellule 9 hexagonale qui sont contigus aux deux côtés adjacents sont deux côtés parallèles formés par les zones plates 3 des bandes 2.

Les deux côtés parallèles et plats présentent une longueur L2.

On note sur la figure 4 que les longueurs de côtés L1 et L2 sont sensiblement identiques. Ainsi, conformément à l'invention, la première longueur L1 est bien comprise entre 80 et 120 % de la seconde longueur L2.

Comme on peut le voir sur la figure 3, l'âme 1 est destinée à être comprise entre une surface 11 inférieure et une surface 12 supérieure, les surfaces 11 et 12 étant opposées selon une direction d'épaisseur E.

Pour simplifier la lecture des figures, les surfaces 11 et 12 ont été représentées partiellement. Il peut s'agir de plaques fines, appelées peaux, comme par exemple celles décrites dans le document WO 2007/137607(les peaux portent la référence 8 dans ce document, tandis que l'âme porte la référence 2 dans ce document).

Il va maintenant être fait référence à un procédé de fabrication de l'âme 1 qui vient d'être présentée.

Initialement, on dispose de bandes de matériaux déformables en alliage d'aluminium qui sont prédécoupées.

La première étape du procédé consiste à faire passer une bande de matériau déformable entre deux rouleaux afin d'aplanir la bande, de manière à ce qu'elle présente en tout point une épaisseur constante.

Chaque bande est alors poinçonnée, suivant une étape de poinçonnage. L'étape de poinçonnage permet de réaliser les zones ondulées sur la bande de matériau déformable à des intervalles réguliers. On obtient ainsi une bande ondulée 2.

Le poinçonnage peut être réalisé par tout procédé de poinçonnage connu de l'homme du métier. Par exemple, les bandes peuvent être estampillées régulièrement, embouties, ou formée en continue par un passage entre deux rouleaux présentant des dents aptes à donner une forme particulière ponctuellement sur les bandes.

Suivant une troisième étape du procédé, on réalise la solidarisation de plusieurs bandes ondulées 2 entre elles.

Pour ce faire, on applique une épaisseur de colle 8 sur une zone plate 3 sur deux d'une première bande ondulée 2.

Puis, on dispose une seconde bande ondulée 2 sur la première bande ondulée 2 enduite de colle 8.

Sur cette seconde bande ondulée, on applique également une épaisseur de colle sur les zones plates 3, toutefois, les zones plates 3 sur lesquelles sont appliquées les épaisseurs de colle 8 ne sont pas les mêmes que celles déjà solidarisées par une épaisseur de colle 8 aux zones plates 3 de la première bande ondulée 2.

On superpose alors une troisième bande sur la seconde bande. Et ainsi de suite jusqu'à obtention d'une âme compacte comprenant le nombre de bandes ondulées désiré.

L'âme, sous sa forme compactée ainsi obtenue, est très peu encombrante car peu épaisse. Cela permet de pouvoir la stocker en grande quantité et présente un avantage certain puisque cela permet de limiter les coûts de transport.

L'âme conforme à l'invention peut également subir des étapes de procédé supplémentaires afin de lui donner sa forme déployée.

Pour ce faire, après avoir réalisé une âme sous sa forme compacte comme décrit ci-dessus, on prévoit de déployer la structure en étendant les bandes ondulées 2 superposées et solidarisées les unes aux autres suivant la direction Dr qui est perpendiculaire à la direction Db des bandes ondulées.

Cette expansion peut être réalisée mécaniquement en maintenant la bande ondulée 2 du dessous de l'âme 1 et en tirant sur la bande ondulée 2 du dessus de l'âme 1.

D'autres méthodes connues de l'homme du métier pourraient également être mises en oeuvre sans sortir du cadre de l'invention.

Une fois que l'on a obtenu une âme sous sa forme déployée, on peut prévoir de fixer l'âme dans la forme obtenue. En effet, si l'âme sous sa forme déployée n'est pas fixée, elle peut de nouveau être compactée.

Pour la maintenir sous sa forme déployée, on prévoit une étape suivant laquelle la structure déployée est trempée dans une résine, puis une ultime étape suivant laquelle la structure déployée enduite de résine est passée dans un four afin de rigidifier la résine.

On comprend de la description qui précède comment l'invention permet de réaliser une âme qui, sous sa forme compactée, est très fine et donc peu encombrante. On comprend également clairement que ce sont les formes des zones ondulées qui permettent cet avantage.

Lorsque les formes des zones ondulées sont associées à des rapports de longueurs L1 et L2 telles que définies précédemment, l'âme présente de meilleurs performances de résistance et de souplesse.

Il devra être compris toutefois que l'invention n'est pas limitée aux exemples décrits précédemment, et qu'elle vise toute réalisation équivalente.

## Revendications

1. Ame (1) de matériau structural sandwich, s'étendant sensiblement suivant des directions d'extension (X, Y) et étant destinée à être comprise entre une surface inférieure (11) et une surface supérieure (12), opposées selon une direction d'épaisseur (E), ladite âme (1) comportant une structure en nid d'abeille, à cellules (9) sensiblement hexagonales régulières, les cellules (9) comprenant :
- au moins deux côtés adjacents (4) reliés par une arête (10), les deux côtés adjacents (4) présentant une première longueur (L1) et comportant chacun une zone ondulée,
- ainsi que au moins deux côtés parallèles (3) présentant une seconde longueur (L2) et étant sensiblement plats,
- ladite première longueur (L1) est comprise sensiblement entre 80 et 120 % de ladite seconde longueur (L2),
**caractérisée en ce que** :
l'un parmi lesdits deux côtés adjacents (4) est l'image de l'autre côté adjacent (4) par rotation d'un angle (α) autour de ladite arête (10).

2. Ame (1) de matériau structural selon la revendication 1, **caractérisée en ce que** ladite structure en nid d'abeille comprend des bandes ondulées (2) superposées les unes sur les autres, et reliées ponctuellement les unes aux autres par des zones de fixation (80), lesdites bandes ondulées (2) présentant un motif (5) répété sur toute leur longueur, ledit motif (5) comprenant une zone plate (3) en alternance avec une zone ondulée (4), lesdites zones plates (3) de chaque bande ondulée (2) étant fixées en alternance soit à une zone plate (3) d'une bande ondulée (2) supérieure soit à une zone plate (3) d'une bande ondulée (2) inférieure, ladite âme (1) de matériau étant déployable entre un état compact et un état déployé par expansion des bandes ondulées (2) superposées suivant une direction (Dr) perpendiculaire à la direction (Db) desdites bandes ondulées (2) superposées, de manière à ce que, dans l'état déployé, les bandes ondulées (2) fixées les unes aux autres forment les deux dits côtés adjacents (4) comportant les zones ondulées et à ce que les deux côtés parallèles (3) sensiblement plats sont formés par deux zones plates (3) de deux bandes ondulées (2) superposées.

3. Ame selon la revendication 1 ou la revendication 2, **caractérisée en ce que** ladite zone ondulée (4) présente un motif en zigzag comprenant au moins deux bosses (6).

4. Ame selon la revendication 3, **caractérisée en ce que** lesdites au moins deux bosses (6) du motif en zigzag présentent chacune un sommet en pointe.

5. Ame selon l'une quelconque des revendications précédentes, **caractérisée en ce que** ladite structure en nid d'abeille est réalisée en alliage d'aluminium.

6. Matériau structural sandwich comprenant une âme (1) selon l'une quelconque des revendications précédentes, ladite âme (1) étant fixée à au moins une peau externe (11 ; 12).

7. Procédé de fabrication d'une âme (1) de matériau structural sandwich selon la revendication 2, comprenant les étapes suivantes :
- une première étape de passage d'une bande de matériau déformable entre deux rouleaux,
- une seconde étape de poinçonnage de ladite bande pour réaliser une succession de zones ondulées (4) et de zones plates (3) équidistantes sur ladite bande ondulée (2), de façon à obtenir une bande ondulée (2),
- une troisième étape de solidarisation d'une première bande ondulée (2) supérieure à une seconde bande ondulée (2) inférieure par fixation d'une zone plate (3) sur deux entre ladite bande ondulée (2) supérieure et ladite bande ondulée (2) inférieure,
- une quatrième étape de solidarisation d'une autre bande ondulée (2) supplémentaire aux bandes ondulées (2) déjà solidarisées par fixation des zones plates (3) de la bande ondulée (2) supplémentaire aux zones plates (3) de la bande ondulée (2) supérieure qui n'ont pas été fixées aux zones plates de la bande ondulée (2) inférieure,
- répétition éventuelle de la quatrième étape plusieurs fois de façon à obtenir une structure feuilletée comportant un nombre prédéterminé de bandes ondulées (2) solidarisées entre elles.

8. Procédé selon la revendication 7, **caractérisé en ce qu'**il comporte une étape supplémentaire suivant laquelle la structure est déployée en étendant les bandes ondulées (2) superposées et solidarisées suivant une direction (Dr) perpendiculaire à la direction (Db) des bandes.

9. Procédé selon la revendication 8, **caractérisé en ce qu'**il comporte une étape supplémentaire de trempe de ladite structure déployée dans une résine.

10. Procédé selon la revendication 9, **caractérisé en ce qu'**il comporte une étape supplémentaire de cuisson de la structure déployée après l'étape de trempe, de façon à rigidifier la structure déployée.

## Patentansprüche

1. Strukturmaterialkern (1) in Sandwich-Anordnung, der sich im Wesentlichen entlang von Ausdehnungsrichtungen (X, Y) erstreckt und dazu bestimmt ist, zwischen einer Unterseite (11) und einer Oberseite (12), die einander in Dickenrichtung (E) gegenüberliegen, angeordnet zu sein, wobei der Kern (1) eine Wabenstruktur mit im Wesentlichen regelmäßigen sechseckigen Zellen (9) aufweist, wobei die Zellen (9) umfassen:
- mindestens zwei aneinandergrenzende Seiten (4), die durch eine Kante (10) verbunden sind, wobei die beiden aneinandergrenzenden Seiten (4) eine erste Länge (L1) aufweisen und jeweils eine gewellte Zone umfassen,
- sowie mindestens zwei parallele Seiten (3), die eine zweite Länge (L2) aufweisen und im Wesentlichen flach sind,
- wobei die erste Länge (L1) im Wesentlichen zwischen 80 und 120 % der zweiten Länge (L2) beträgt,
**dadurch gekennzeichnet, dass**:
eine von den beiden aneinandergrenzenden Seiten (4) das Abbild der anderen angrenzenden Seite (4) durch Drehung um einen Winkel (α) um die Kante (10) ist.

2. Strukturmaterialkern (1) nach Anspruch 1, **dadurch gekennzeichnet, dass** die Wabenstruktur gewellte Bänder (2) umfasst, die übereinander angeordnet und punktuell miteinander durch Befestigungszonen (80) verbunden sind, wobei die gewellten Bänder (2) ein Motiv (5) aufweisen, das sich auf ihrer gesamten Länge wiederholt, wobei das Motiv (5) eine flache Zone (3) abwechselnd mit einer gewellten Zone (4) aufweist, wobei die flachen Zonen (3) jedes gewellten Bandes (2) abwechselnd entweder an einer flachen Zone (3) eines oberen gewellten Bandes (2) oder an einer flachen Zone (3) eines unteren gewellten Bandes (2) befestigt sind, wobei der Materialkern (1) zwischen einem kompakten Zustand und einem ausgebreiteten Zustand durch Ausweiten der übereinander angeordneten gewellten Bänder (2) in eine Richtung (Dr), die senkrecht zur Richtung (Db) der übereinander angeordneten gewellten Bänder (2) ausgebreitet werden kann, so dass im ausgebreiteten Zustand die gewellten Bänder (2), die aneinander befestigt sind, die beiden aneinandergrenzenden Seiten (4) bilden, umfassend die gewellten Zonen, und dass die beiden im Wesentlichen flachen parallelen Seiten (3) von zwei flachen Zonen (3) von zwei übereinander angeordneten gewellten Bändern (2) gebildet sind.

3. Kern nach Anspruch 1 oder Anspruch 2, **dadurch gekennzeichnet, dass** die gewellte Zone (4) ein Zickzack-Motiv, umfassend mindestens zwei Erhebungen (6), aufweist.

4. Kern nach Anspruch 3, **dadurch gekennzeichnet, dass** die mindestens zwei Erhebungen (6) des Zickzack-Motivs jeweils eine Spitze aufweisen.

5. Kern nach einem der vorhergehenden Ansprüche, **dadurch gekennzeichnet, dass** die Wabenstruktur aus einer Aluminiumlegierung hergestellt ist.

6. Strukturmaterial in Sandwich-Anordnung, umfassend einen Kern (1) nach einem der vorhergehenden Ansprüche, wobei der Kern (1) an mindestens einer Außenhaut (11;12) befestigt ist.

7. Verfahren zur Herstellung eines Strukturmaterialkerns (1) in Sandwich-Anordnung nach Anspruch 2, umfassend die folgenden Schritte:
- einen ersten Schritt der Durchführung eines verformbaren Materialbandes zwischen zwei Walzen,
- einen zweiten Schritt des Stanzens des Bandes, um eine Aufeinanderfolge von gewellten Zonen (4) und von flachen Zonen (3) in gleichen Abständen auf dem gewellten Band (2) herzustellen, um ein gewelltes Band (2) zu erhalten,
- einen dritten Schritt der Verbindung eines ersten oberen gewellten Bandes (2) mit einem zweiten unteren gewellten Band (2) durch Befestigung jeder zweiten flachen Zone (3) zwischen dem oberen gewellten Band (2) und dem unteren gewellten Band (2),
- einen vierten Schritt der Verbindung eines weiteren zusätzlichen gewellten Bandes (2) mit den bereits verbundenen gewellten Bändern (2) durch Befestigung der flachen Zonen (3) des zusätzlichen gewellten Bandes (2) an den flachen Zonen (3) des oberen gewellten Bandes (2), die nicht an den flachen Zonen des unteren gewellten Bandes (2) befestigt wurden,
- eventuelle mehrmalige Wiederholung des vierten Schrittes, um eine geschichtete Struktur zu erhalten, umfassend eine vorbestimmte Anzahl von miteinander verbundenen gewellten Bändern (2).

8. Verfahren nach Anspruch 7, **dadurch gekennzeichnet, dass** es einen zusätzlichen Schritt umfasst, nach dem die Struktur ausgebreitet wird, wobei die übereinander angeordneten gewellten Bänder (2) entfaltet und in einer Richtung (Dr) senkrecht auf die Richtung (Db) der Bänder verbunden werden.

9. Verfahren nach Anspruch 8, **dadurch gekennzeichnet, dass** es einen zusätzlichen Schritt des Härtens der ausgebreiteten Struktur in einem Harz umfasst.

10. Verfahren nach Anspruch 9, **dadurch gekennzeichnet, dass** es einen zusätzlichen Schritt des Brennens der ausgebreiteten Struktur nach dem Schritt des Härtens umfasst, um die ausgebreitete Struktur zu versteifen.

## Claims

1. A sandwich structural material core structure, extending substantially along extension directions (X, Y) and intended for being comprised between a lower surface (11) and an upper surface (12), opposite to each other according to a thickness direction (E), said core structure (1) including a honeycomb structure, having cells (9) that are substantially regular hexagonal, the cells (9) comprising:
- at least two adjacent sides (4) connected through an edge (10), the two adjacent sides (4) having a first length (L1) and each including a corrugated area,
- as well as at least two parallel sides (3) having a second length (L2) and being substantially flat,
- said first length (L1) is comprised substantially in between 80 and 100 % of said second length (L2),
**characterised in that**:
one of said two adjacent sides (4) is the image of the other adjacent side (4) by rotation of an angle (α) around said edge (10).

2. The structural material core structure (1) according to Claim 1, **characterised in that** said honeycomb structure comprises corrugated strips (2) overlapping one another, and connected pointwise one another via attachment areas (80), said corrugated strips (2) having a pattern (5) that is repeated on their entire length, said pattern (5) comprising a flat area (3) alternating with a corrugated area (4), said flat areas (3) of each corrugated strip (2) being alternately attached either to a flat area (3) of an upper corrugated strip (2) or to a flat area (3) of a lower corrugated strip (2), said material core structure (1) being unfoldable between a compact state and an unfolded state by expanding the overlapped corrugated strips (2) along a direction (Dr) perpendicular to the direction (Db) of said overlapped corrugated strips (2), so that, in the unfolded state, the corrugated strips, attached one to the other, form said two adjacent sides (4) including the corrugated areas, and so that the two substantially flat parallel sides (3) are formed by two flat areas (3) of two overlapped corrugated strips (2).

3. The core structure according to Claim 1 or Claim 2, **characterised in that** said corrugated area (4) has a zigzag pattern comprising at least two humps (6).

4. The core structure according to Claim 3, **characterised in** the said at least two humps (6) of the zigzag pattern each have a sharp tips.

5. The core structure according to any of the previous claims, **characterised in that** said honeycomb structure is made in aluminium alloy.

6. A sandwich structural material comprising a core structure (1) according to any of the previous claims, said core structure (1) being attached to at least one outer skin (11; 12).

7. A method for manufacturing a sandwich structural material core structure (1) according to Claim 2, comprising the following steps:
- a first step of passing a deformable material strip between two rolls,
- a second step of punching said strip in order to make a succession of equidistant corrugated areas (4) and flat areas (3) on said corrugated strip (2), so as to obtain a corrugated strip (2),
- a third step of fastening a first upper corrugated strip (2) to a second lower corrugated (2) by attaching one flat area (3) out of two on said upper corrugated strip (2) and said lower corrugated strip (2),
- a fourth step of fastening another additional corrugated strip (2) to the corrugated strips (2) that already fastened by attaching the flat areas (3) of the additional corrugated strip (2) to the flat areas (3) of the upper corrugated strip (2) which have not been attached to the flat areas of the lower corrugated strip (2),
- possibly repeating this fourth step several times so as to obtain a multilayered structure including a predetermined number of corrugated strips (2) that are fastened between each other.

8. The method according to Claim 7, **characterised in that** it includes an additional step in which the structure is unfolded by extending the corrugated strips (2) that are overlapped and fastened along a direction (Dr) perpendicular to the direction (Db) of the strips.

9. The method according to Claim 8, **characterised in that** it includes an additional step of soaking said unfolded structure in resin.

10. The method according to Claim 9, **characterised in that** it includes an additional step of baking the unfolded structure after the soaking, so as to rigidify the unfolded structure.
